# EUROPÄISCHE PATENTSCHRIFT

(11) **EP 1 706 287 B1**
(45) Veröffentlichungstag und Bekanntmachung des Hinweises auf die Patenterteilung: **18.03.2009**
(21) Anmeldenummer: 04804938.1
(22) Anmeldetag: 20.12.2004
(51) Int. Cl.: B60K 15/077

(54) **KRAFTSTOFF-F RDEREINHEIT**
FUEL FEED UNIT
UNITE D'ACHEMINEMENT DE CARBURANT

(30) Priorität: 21.01.2004 DE 102004003114
(43) Veröffentlichungstag der Anmeldung: 04.10.2006
(73) Patentinhaber: Continental Automotive GmbH, 30165 Hannover (DE)
(72) Erfinder: DICKENSCHEID, Lothar, 55437 Ockenheim (DE)
(86) Internationale Anmeldenummer: PCT/EP2004/053602
(87) Internationale Veröffentlichungsnummer: WO 2005/070719

(56) Entgegenhaltungen:
- EP-A- 0 819 843
- EP-A- 0 864 458
- EP-A- 1 199 464
- WO-A-03/084775
- DE-A1- 4 224 981
- DE-A1- 19 504 217
- US-A1- 2002 043 253

## Beschreibung

Die Erfindung betrifft eine Kraftstoff-Fördereinheit zur Förderung von Kraftstoff aus einem Kraftstoffbehälter mit einer Kraftstoff aus einem Schwalltopf ansaugenden Kraftstoffpumpe, mit einer Kraftstoff aus dem Kraftstoffbehälter in den Schwalltopf fördernden Saugstrahlpumpe und mit einer von der Druckseite der Kraftstoffpumpe zu der Saugstrahlpumpe geführten Treibmittelleitung, wobei in der Treibmittelleitung ein druckabhängiges Volumenstromreduzierventil angeordnet ist.

Solche Kraftstoff-Fördereinheiten werden in heutigen Kraftfahrzeugen häufig eingesetzt und sind aus der Praxis bekannt. Die Saugstrahlpumpen werden von der Kraftstoffpumpe mit Kraftstoff versorgt und fördern Kraftstoff aus dem Kraftstoffbehälter beispielsweise in einen Schwalltopf der Kraftstoff-Fördereinheit. Die Förderung des Kraftstoffs erfolgt bei den bekannten Fördereinheiten unabhängig davon, ob sich Kraftstoff in dem Schwalltopf befindet.

Insbesondere bei bedarfsgeregelten Fördereinheiten, bei denen die Förderleistung der Kraftstoffpumpe in Abhängigkeit von dem Kraftstoffbedarf einer Brennkraftmaschine des Kraftfahrzeuges geregelt wird, ist die Saugstrahlpumpe derart dimensioniert, dass sie auch bei einem geringen Förderdruck der Kraftstoffpumpe ausreichend Kraftstoff fördert. Dies führt jedoch dazu, dass in den meisten Arbeitszuständen die Saugstrahlpumpe unnötig viel Kraftstoff als Treibmittel erhält, was den Einsatz einer besonders leistungsstarken Pumpeneinheit erfordert.

Aus der DE 195 04 217 A1, die den Oberbegriff des Anspruch 1 bildet, ist eine Fördereinheit mit einer Saugstrahlpumpe bekannt, in deren Treibmittelleitung ein Druckventil angeordnet ist, dem nachfolgend eine separat angeordnete Drossel folgt. Das Druckventil hat die Aufgabe, die Treibmittelleitung erst ab einem bestimmten Druck zu öffnen.

Der Erfindung liegt das Problem zugrunde, eine Kraftstoff-Fördereinheit der eingangs genannten Art so weiterzubilden, dass insbesondere bei bedarfsgeregelten Fördereinheiten eine unnötige Förderung an Kraftstoff zu der Saugstrahlpumpe vermieden wird.

Dieses Problem wird erfindungsgemäß dadurch gelöst, dass das Volumenstromreduzierventil den der Saugstrahlpumpe zugeführten Volumenstrom an Kraftstoff bei steigendem Förderdruck der Kraftstoffpumpe drosselt, dass der Kolben einen Abschnitt mit sich vergrößerndem Querschnitt, vorzugsweise kegelförmig, aufweist, mit dem er einer Steuerkante des Kanals gegenübersteht.

Durch diese Gestaltung wird mit steigendem Förderdruck der Kraftstoffpumpe die Förderung von Kraftstoff über die Treibmittelleitung zu der Saugstrahlpumpe beibehalten oder gedrosselt. Die Saugstrahlpumpe kann daher für eine geringe Förderleistung der Kraftstoffpumpe dimensioniert werden. Steigt die Förderleistung der Kraftstoffpumpe infolge steigender Bedarfsanforderung der Brennkraftmaschine, regelt das Volumenstromreduzierventil die Führung des Kraftstoffs über die Treibmittelleitung zu der Saugstrahlpumpe herunter. Damit wird eine unnötige Förderung von Kraftstoff zu der Saugstrahlpumpe vermieden. Hierdurch lässt sich die erfindungsgemäße Kraftstoff-Fördereinheit besonders klein dimensionieren. Weiterhin wird durch die geringe Förderung von Kraftstoff innerhalb des Kraftstoffbehälters eine Permeation von Kraftstoff in die Umgebung besonders gering gehalten.

Das Volumenstromreduzierventil gestaltet sich zudem konstruktiv besonders einfach, weil das Volumenstromreduzierventil einen von einem Federelement gegen den Förderdruck der Kraftstoffpumpe vorgespannten Kolben hat, weil der Kolben in einem Kanal verschieblich angeordnet ist, und wenn ein Querschnitt eines zwischen dem Kolben und dem Kanal angeordneten Ringspaltes sich mit gegen die Kraft des Federelementes bewegten Kolbens verkleinert.

Die Verkleinerung des Ringspaltes in dem Volumenstromreduzierventil erfordert gemäß einer vorteilhaften Weiterbildung der Erfindung einen besonders geringen baulichen Aufwand, wenn der Kolben einen Abschnitt mit einem sich vergrößernden Querschnitt aufweist, mit dem er einer Steuerkante des Kanals gegenübersteht. In einer besonders einfach zu fertigenden Ausführung ist der Abschnitt als Konus ausgebildet.

Der Kolben kann gemäß einer anderen vorteilhaften Weiterbildung der Erfindung einen kostengünstig zu fertigenden zylindrischen Abschnitt aufweisen, wenn der Kanal einen konischen Abschnitt aufweist.

Ein besonders verlustarmes Durchströmen des Volumenstromreduzierventils wird mit einem Kolben erreicht, dessen Durchmesser wesentlich kleiner als der Kanaldurchmesser ist, und der lediglich im Bereich des Ringspaltes und des Federelementes einen Durchmesser besitzt, der in etwa dem Kanaldurchmesser entspricht.

Die Steuerung des Volumenstromreduzierventils gegenüber dem im Kraftstoffbehälter herrschenden Druck erfordert gemäß einer anderen vorteilhaften Weiterbildung der Erfindung einen besonders geringen Aufwand, wenn das Volumenstromreduzierventil eine zur Anordnung in dem Kraftstoffbehälter vorgesehene Öffnung hat und wenn die dem Förderdruck abgewandte Seite des Kolbens eine Verbindung mit der Öffnung aufweist.

Zur weiteren Vereinfachung der Steuerung des Volumenstromreduzierventils trägt es bei, wenn der Kolben von einem Federelement in seine die Treibmittelleitung freigebende Stellung vorgespannt ist.

Die Anordnung eines zusätzlichen Kaltstartventils, welches bei Anlaufen der Kraftstoffpumpe die Treibmittelleitung bis zum Erreichen eines Mindestdrucks verschlossen hält, wird in einfacher Weise vermieden, wenn das dem Ringspalt zugeordnete Ende des Kolbens eine Dichtung aufweist, die mit einem Dichtsitz im Kanal zusammenwirkt.

Die Erfindung lässt zahlreiche Ausführungsformen zu. Zur weiteren Verdeutlichung ihres Grundprinzips ist eine davon in der Zeichnung dargestellt und wird nachfolgend beschrieben. Diese zeigt in
- Figur 1: schematisch eine erfindungsgemäße, in einem Kraftstoffbehälter angeordnete Kraftstoff- Fördereinheit,
- Figur 2: stark vergrößert eine Schnittdarstellung durch ein Volumenstromreduzierventil der Kraftstoff- Fördereinheit aus Figur 1.

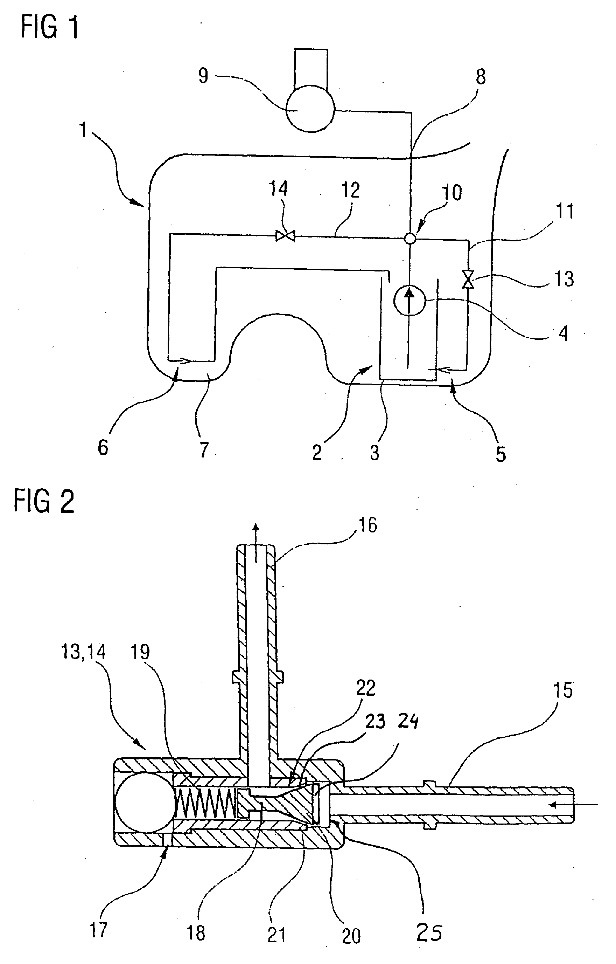

Figur 1 zeigt einen als Satteltank ausgebildeten Kraftstoffbehälter 1 für ein Kraftfahrzeug mit einer darin angeordneten Kraftstoff-Fördereinheit 2. Die Kraftstoff-Fördereinheit 2 hat eine Kraftstoff aus einem im Bodenbereich des Kraftstoffbehälters 1 angeordneten Schwalltopf 3 ansaugende Kraftstoffpumpe 4 und zwei Saugstrahlpumpen 5, 6 zur Befüllung des Schwalltopfes 3. Eine der Saugstrahlpumpen 6 ist in einer von dem Schwalltopf 3 getrennten Kammer 7 des Kraftstoffbehälters 1 angeordnet, während die andere Saugstrahlpumpe 5 den Schwalltopf 3 mit dem diesen unmittelbar umgebenden Kraftstoff befüllt. Von der Druckseite der Kraftstoffpumpe 4 führt eine Vorlaufleitung 8 zu einer Brennkraftmaschine 9 des Kraftfahrzeuges. Die Kraftstoffpumpe 4 wird in Abhängigkeit von dem Bedarf der Brennkraftmaschine 9 geregelt.

In der Vorlaufleitung 8 ist ein Verteiler 10 angeordnet, an denen zu den Saugstrahlpumpen 5, 6 führende Treibmittelleitungen 11, 12 angeschlossen sind. Über diese Treibmittelleitungen 11, 12 werden die Saugstrahlpumpen 5, 6 mit Kraftstoff als Treibmittel versorgt. In den Treibmittelleitungen 11, 12 sind jeweils Volumenstromreduzierventile 13, 14 angeordnet. Die Volumenstromreduzierventile 13, 14 verringern den den Saugstrahlpumpen 5, 6 zugeführten Volumenstrom an Kraftstoff mit steigendem Förderdruck der Kraftstoffpumpe 4.

Figur 2 zeigt eine Schnittdarstellung durch eines der Volumenstromreduzierventile 13, 14 der Kraftstoff-Fördereinheit 2 aus Figur 1. Das Volumenstromreduzierventil 13, 14 weist einen ersten Anschlussstutzen 15 für das zu der Vorlaufleitung 8 aus Figur 1 führende Teilstück der Treibmittelleitung 11, 12 und einen zweiten Anschlussstutzen 16 für das zu der Saugstrahlpumpe 5, 6 führende Teilstück der Treibmittelleitung 11, 12 auf. Zur Verdeutlichung sind die Strömungen des Kraftstoffs mit Pfeilen gekennzeichnet. Weiterhin hat das Volumenstromreduzierventil 13, 14 eine in den Kraftstoffbehälter 1 aus Figur 1 weisende Öffnung 17. In dem Volumenstromreduzierventil 13, 14 ist ein Kolben 18 verschieblich angeordnet und gegenüber der Öffnung 17 abgedichtet. Ein Federelement 19 spannt den Kolben 18 in Richtung des ersten Anschlussstutzens 15 vor. Weiterhin hat der Kolben 18 einen kegelförmigen Abschnitt 20, welcher einem konischen Abschnitt 21 eines zu dem zweiten Anschlussstutzen 16 führenden Kanals 22 gegenübersteht. Selbstverständlich kann alternativ zu dieser Ausführungsform entweder der Kolben 18 oder der Kanal 22 zylindrisch ausgebildet sein. Hierdurch hat das Volumenstromreduzierventil 13, 14 einen Ringspalt 23 zwischen dem Kolben 18 und dem Kanal 22, durch den der Kraftstoff von der Kraftstoffpumpe 4 aus Figur 1 zu der entsprechenden Saugstrahlpumpe 5, 6 gelangt.

Bei steigendem Förderdruck der Kraftstoffpumpe 4 steigt der Druck in dem ersten Anschlussstutzen 15. Hierdurch wird der Kolben 18 gegen die Kraft des Federelementes 19 verschoben und damit der Ringspalt verkleinert. Dies führt zu einer Drosselung der Förderung von Kraftstoff zu der in Figur 1 dargestellten Saugstrahlpumpe 5, 6.

Der dem Ringspalt 23 zugewandte Abschnitt 20 des Kolbens 18 trägt zusätzlich eine Dichtung 24, die mit einem als Dichtsitz ausgebildetem Absatz 25 des Anschlussstutzens 15 zusammenwirkt. Bei keinem oder geringem Förderdruck, z. B. beim Start der Kraftstoffpumpe 4 wird die Dichtung 24 durch das Federelement 19 gegen den Absatz 25 gedrückt, so dass das Volumenstromreduzierventil 13, 14 während der Startphase als Startventil wirkt.

## Patentansprüche

1. Kraftstoff-Fördereinheit (2) zur Förderung von Kraftstoff aus einem Kraftstoffbehälter (1) mit einer Kraftstoff aus einem Schwalltopf (3) ansaugenden Kraftstoffpumpe (4), mit einer Kraftstoff aus dem Kraftstoffbehälter (1) in den Schwalltopf (3) fördernden Saugstrahlpumpe (5, 6) und mit einer von der Druckseite der Kraftstoffpumpe (4) zu der Saugstrahlpumpe (5, 6) geführten Treibmittelleitung (11, 12), wobei in der Treibmittelleitung (11, 12) ein druckabhängiges Volumenstromreduzierventil (13, 14) angeordnet ist, **dadurch gekennzeichnet, dass** das Volumenstromreduzierventil (13, 14) den der Saugstrahlpumpe (5, 6) zugeführten Volumenstrom an Kraftstoff bei steigendem Förderdruck der Kraftstoffpumpe (4) drosselt, dass das Volumenstromreduzierventil (13, 14) einen von einem Federelement (19) gegen den Förderdruck der Kraftstoffpumpe (4) vorgespannten Kolben (18) hat und dass der Kolben (18) in einem Kanal (22) verschieblich angeordnet ist und dass ein Querschnitt eines zwischen dem Kolben (18) und dem Kanal (22) angeordneten Ringspaltes sich mit gegen die Kraft des Federelementes (19) bewegten Kolbens (18) verkleinert.

2. Kraftstoff-Fördereinheit (2) nach Anspruch 1, **dadurch gekennzeichnet, dass** der Kolben (18) einen Abschnitt (20) mit sich vergrößerndem Querschnitt, vorzugsweise kegelförmig, aufweist, mit dem er einer Steuerkante des Kanals (22) gegenübersteht.

3. Kraftstoff-Fördereinheit (2) nach Anspruch 1, **dadurch gekennzeichnet, dass** der Kanal (22) einen sich aufweitenden, vorzugsweise konischen Abschnitt (21) aufweist.

4. Kraftstoff-Fördereinheit (2) nach Anspruch 1, **dadurch gekennzeichnet, dass** das Volumenstromreduzierventil (13, 14) eine zur Anordnung in dem Kraftstoffbehälter (1) vorgesehene Öffnung (17) hat und dass die dem Förderdruck abgewandte Seite des Kolbens (18) eine Verbindung mit der Öffnung (17) aufweist.

5. Kraftstoff-Fördereinheit (2) nach Anspruch 1, **dadurch gekennzeichnet, dass** der Kolben (18) von einem Federelement (19) in seine die Treibmittelleitung (11, 12) freigebende Stellung vorgespannt ist.

## Claims

1. Fuel feed unit (2) for feeding fuel from a fuel tank (1), having a fuel pump (4) drawing in fuel from a swirl pot (3), a suction jet pump (5, 6) feeding fuel from the fuel tank (1) into the swirl pot (3), and a pump fluid line (11, 12) led to the suction jet pump (5, 6) from the delivery side of the fuel pump (4), with a pressure-dependent volume flow reducing valve (13, 14) being arranged in the pump fluid line (11, 12) **characterized in that** the volume flow reducing valve (13, 14) restricts the fuel volume flow delivered to the suction jet pump (5, 6) as the delivery pressure of the fuel pump (4) increases, the volume flow reducing valve (13, 14) has a piston (18), preloaded by a spring element (19) against the delivery pressure of the fuel pump (4), that the piston (18) is displaceably arranged in a duct (22) and that a cross-section of an annular gap arranged between the piston (18) and the duct (22) diminishes as the piston (18) is moved against the force of the spring element (19).

2. Fuel feed unit (2) according to Claim 1, **characterized in that** the piston (18) has a section (20) with a widening, preferably conical, cross section opposed to a control edge of the duct (22).

3. Fuel feed unit (2) according to Claim 1, **characterized in that** the duct (22) has a widening, preferably conical section (21).

4. Fuel feed unit (2) according to Claim 1, **characterized in that** the volume flow reducing valve (13, 14) has an opening (17) provided for arrangement in the fuel tank (1) and that the side of the piston (18) remote from the delivery pressure has a connection to the opening (17).

5. Fuel feed unit (2) according to Claim 1, **characterized in that** piston (18) is preloaded by means of a spring element (19) into its position opening up the pump fluid line (11, 12)

## Revendications

1. Unité de transfert de carburant (2) permettant de transférer du carburant à partir d'un réservoir à carburant (1), ladite unité de transfert de carburant comportant une pompe à carburant (4), qui aspire du carburant dans un pot d'accumulation (3), une pompe à jet aspirant (5, 6), qui transfère du carburant du réservoir à carburant (1) dans le pot d'accumulation (3), et une conduite de fluide moteur (11, 12), qui conduit du côté pression de la pompe à carburant (4) à la pompe à jet aspirant (5, 6), où une soupape de réduction (13, 14) du flux volumique commandée par la pression est placée sur la conduite de fluide moteur (11, 12), **caractérisé par le fait que** la soupape de réduction (13, 14) du flux volumique réduit le flux volumique envoyé à la pompe à jet aspirant (5, 6) lorsque la pression de transfert de la pompe à carburant (4) augmente, que la soupape de réduction (13, 14) du flux volumique a un piston (18) qui est soumis, par un organe à ressort (19) à une force de précontrainte et s'oppose à la pression de transfert de la pompe à carburant (4) et que le piston (18) est monté en translation dans un canal (22) et que la section transversale d'un interstice annulaire placé entre le piston (18) et le canal (22) devient plus faible lorsque le piston se déplace contre la force de l'organe à ressort (19).

2. Unité de transfert de carburant (2) selon la revendication 1, **caractérisé par le fait que** le piston (18) comporte une partie (20) dont la section transversale va en s'agrandissant, de préférence conique, et avec laquelle il fait face à une arête de commande du canal (22).

3. Unité de transfert de carburant (2) selon la revendication 1, **caractérisé par le fait que** le canal (22) comporte une partie (21) qui va en s'agrandissant, de préférence conique.

4. Unité de transfert de carburant (2) selon la revendication 1, **caractérisé par le fait que** la soupape de réduction (13, 14) du flux volumique a une ouverture (17) prévue pour être disposée dans le réservoir à carburant (1) et que le côté du piston (18) opposé à la pression de transfert comporte une liaison avec l'ouverture (17).

5. Unité de transfert de carburant (2) selon la revendication 1, **caractérisé par le fait que** le piston (18) est soumis par un organe à ressort (19) à une force de précontrainte dans sa position qui ouvre la conduite de fluide moteur (11, 12).
